# EUROPEAN PATENT SPECIFICATION

(11) **EP 1 419 696 B1**
(45) Date of publication and mention of the grant of the patent: **23.01.2008**
(21) Application number: 03445126.0
(22) Date of filing: 04.11.2003
(51) Int. Cl.: A22C 13/00

(54) **Method of pre-soaking and reinforcing non-edible collagen casings**
Verfahren zur Tränkung und Verstärkung von nichtessbaren füllfertigen Kollagenhüllen
Procédé pour tremper des enveloppes non-comestibles en collagène

(30) Priority: 15.11.2002 SE 0203371
(43) Date of publication of application: 19.05.2004
(73) Proprietor: Naturin GmbH & Co., 69469 Weinheim (DE)
(72) Inventor: Rydenfors,Göran, 230 41 Klagerup (SE)
(74) Representative: Stenbäck, Maria Elisabeth

(56) References cited:
- EP-A- 1 018 301
- FR-A- 1 483 239
- GB-A- 2 019 344
- US-A- 3 930 035

## Description

### Field of the Invention

The present invention relates to a method of pre-soaking a non-edible collagen casing for foodstuffs and reinforcing the clip strength and cooking resistance thereof.

### Background Art

In the foodstuffs industry, there are different kinds of collagen casings which are suitable for being stuffed with various foodstuffs, in particular meat mixtures. The properties of the collagen casing are important for the type of foodstuffs used as stuffing, since the stuffing may vary significantly in terms of, for example, both consistency and temperature. For collagen casings that are used for hard foodstuff stuffings, such as salami - where the stuffing is frozen, the collagen casing must have excellent properties in terms of strength and resistance. Today, not all collagen casings are sufficiently stable and durable for the stuffings available.

SE 515,441 discloses a non-edible collagen casing intended for foodstuffs and a method of softening, stabilising and preserving it. According to said method, the dried collagen casing is treated with an aqueous solution of sodium chloride in a concentration of 5-25% by weight. The purpose of pre-soaking the casing is that it can be done in an effective manner without raising the price of the product to any appreciable extent. The sausage maker saves valuable production time, since he or she does not have to pre-soak the casing before stuffing.

The aim of the experiments carried out in connection with the present invention has been to provide a stronger collagen casing in terms of cooking resistance and clip strength, while reducing the amount of NaCl for environmental reasons.

EP 1 018 301 describes a process for manufacturing a ready-to-stuff non-edible casing comprising soaking the casing in an aqueous salt solution. Reinforcing methods are not described and improvement of clip strength and cooking resistance not commented.

### Summary of the Invention

In one aspect, the present invention relates to a method of pre-soaking a non-edible collagen casing for foodstuffs and reinforcing the clip strength and/or cooking resistance thereof, the method comprising treating the dried collagen casing with an aqueous solution of at least two salts selected from the group consisting of sodium bicarbonate, sodium sulphate, ammonium chloride, calcium chloride, sodium hydrogen phosphate, potassium hydrogen phosphate, potassium chloride, ammonium sulphate, optionally in combination with sodium chloride in the range of 0-4% by weight, the total salt concentration being in the range of 5-18% by weight.

According to a further aspect, the invention concerns a pre-soaked, reinforced non-edible collagen casing, which is obtainable by means of said method.

### Description of Preferred Embodiments

In a preferred embodiment of the method according to the invention, the salt concentration is in the range of 8-12% by weight.

Examples of salt solutions that contain two salts or more are a salt solution containing sodium sulphate (6% by weight) and sodium chloride (2% by weight), a salt solution containing sodium bicarbonate (3% by weight), sodium sulphate (3% by weight) and sodium chloride (4% by weight), a salt solution containing ammonium chloride (5% by weight), sodium chloride (3% by weight) and potassium chloride (2% by weight), a salt solution containing sodium hydrogen phosphate (3% by weight), potassium chloride (3% by weight) and sodium chloride (3% by weight) and a salt solution containing sodium bicarbonate (4% by weight), sodium chloride (4% by weight) and sodium sulphate (2% by weight). Salt solutions containing only one salt can be a salt solution containing only one of the above salts.

In yet another embodiment of the method according to the invention, the pre-soaked non-edible collagen casing is further packed in a packing of a material having good barrier properties, preferably under vacuum.

Accordingly, in conjunction with the present invention the clip strength has been improved. When the collagen casing has been stuffed with a sufficient amount of foodstuffs, the sausages are closed at both ends by means of a metal clip. In the present invention, further improvements have been made in this respect by combining different salts in a solution for preserving the collagen casing.

The different combinations of salts in a solution have an improving effect upon the casing and its properties. Since it is desirable, for environmental reasons, to reduce the discharge of sodium chloride in some countries, the amount of sodium chloride in the salt combinations according to the present invention has been reduced. As a result thereof, an improved collagen casing is obtained, while retaining properties such as storage life, strength and stuffing properties.

The following salts have been tested one at a time and in combination: sodium bicarbonate, ammonium chloride, potassium chloride, sodium sulphate, ammonium sulphate, potassium chloride, sodium hydrogen phosphate and potassium hydrogen phosphate. Besides reducing the amount of sodium chloride, in connection with which the collagen casing retains its stuffing properties and preservation, certain combinations result in improved clip strength and others in improved cooking resistance, while yet other combinations result in both. The cooking resistance is the resistance of the casing during heat treatment of the collagen casing containing the foodstuff, for example sausage. By using sodium sulphate, for example, it has been possible to reduce the salt amount to 8% and replace the sodium chloride completely, which has also resulted in improved clip properties. A better deswelling is obtained when using sodium sulphate, which means that a better clip strength is obtained and/or that the salt amount can be reduced, compared with sodium chloride. Examples relating to different purposes other than the purpose of obtaining a ready-to-stuff casing will be described below.

The phrase "reinforcing a collagen casing" as used in the present description means reinforcing the clip strength and/or cooking resistance of the collagen casing.

### Examples

### Example 1: Increased cooking resistance and clip strength

(3%) sodium bicarbonate, 1-6%
(3%) sodium sulphate, 0-8%
(4%) sodium chloride, 0-4%

### Example 2: Increased clip strength

(6%) sodium sulphate, 2-18%
(2%) sodium chloride, 0-4%

### Example 3: Increased cooking resistance

(5%) ammonium chloride, 2-10%
(4%) sodium chloride, 0-4%
(2%) calcium chloride, 0-10%

### Example 4: Increased cooking resistance

(3%) sodium hydrogen phosphate, 0-6%
(3%) potassium chloride, 0-10%
(3%) sodium chloride, 0-4%

### Example 5: Increased cooking resistance

(4%) sodium bicarbonate, 2-6%
(4%) sodium chloride, 2-4%
(2%) sodium sulphate, 0-4%

In the above examples, the used concentration of the salt is indicated in brackets in percentage by weight in front of each salt. The range indicated after the salt refers to the concentration range within which the salt in question can be used in combination with the other salts of the example when carrying out the method according to the invention. In the present invention, the term "%" or "per cent" is intended to cover percentages by weight.

The above examples are merely illustrative and are not to be considered as limitative of the present invention. Other combinations of the indicated salts are conceivable and other salts that are not mentioned herein can be used, provided that they achieve the advantages of the present invention. Nor is the invention limited to the specific salt concentrations used above.

Tests and analyses have been carried out on sausage casings which have been produced from the same collagen stock, and extruded, cured, and dried in the same manner. The sausage casings are divided into eight parts, one group of which is a control group (immersed in a 12% solution of sodium chloride). The other samples are subjected to the salt solution concentrations indicated in the above examples 1-5.

The sausage casing samples were allowed to soak up 1.5 times their dry weight. The samples are packed under low vacuum in gas-tight plastic bags and welded up. The casings were tested again after respectively 1, 3, 6, and 9 months of storage at a temperature of 25 °C. Testing at these intervals was carried out to determine stuffing properties, clip strength, cooking resistance and bacteriological status.

The clip strength was determined by stuffing the sausages with foodstuffs so that their hardness increased and then measuring the stuffing calibre to determine said hardness. With a normal stuffing pressure, a calibre of 52 mm is obtained. The stuffing pressure was then increased in steps of 0.5 mm until breakage occurred. Five measurements were made on each sample. The average calibre was calculated.

The cooking resistance was determined by hanging the 0.5-m-long sausage casings in a humidification chamber at a temperature of 78 °C for 60 min. The casings were inflated by means of compressed air until they ruptured and the pressure was registered. The average for five sausage casings from each example was calculated.

The bacteriological status was determined by means of agar plates for moulds/yeasts and total bacteria. The plates were pressed against the casing and then grown at 30 °C and 37 °C, respectively, for 48 hours. The plates were inspected by ocular examination and divided into no growth, sparse, moderate, abundant and substantial growth. Moderate growth is acceptable.

The results are illustrated in the following tables.

**After 1 month**

| Ex. | Clip strength (mm) | Cooking resistance (hp/cm²) | Stuffing properties | Bacterial growth | Moulds/ yeasts |
|---|---|---|---|---|---|
| Ref. | 53.8 | 3.1 | good | none | sparse |
| 1 | 55.4 | 7.2 | slightly hard in stuffing break | none | sparse |
| 2 | 56.7 | 2.9 | rigid and slightly hard | none | none |
| 3 | 54.1 | 3.7 | flexible | sparse | none |
| 4 | 54.7 | 6.8 | good | sparse | sparse |
| 5 | 54.2 | 6.5 | good, flexible | sparse | sparse |

**After 3 months**

| Ex. | Clip strength (mm) | Cooking resistance (hp/cm²) | Stuffing properties | Bacterial growth | Moulds/ yeasts |
|---|---|---|---|---|---|
| Ref. | 54.1 | 2.9 | good | none | sparse |
| 1 | 55.8 | 6.8 | slightly hard in stuffing break | none | sparse |
| 2 | 56.9 | 2.8 | rigid and slightly hard | none | sparse |
| 3 | 53.7 | 3.6 | flexible | moderate | none |
| 4 | 54.3 | 6.7 | good | sparse | sparse |
| 5 | 54.1 | 7.0 | good, flexible | sparse | sparse |

**After 6 months**

| Ex. | Clip strength (mm) | Cooking resistance (hp/cm²) | Stuffing properties | Bacterial growth | Moulds/ yeasts |
|---|---|---|---|---|---|
| Ref. | 54.3 | 3.2 | good | sparse | moderate |
| 1 | 56.0 | 6.9 | slightly hard in stuffing break | sparse | sparse |
| 2 | 57.1 | 3.0 | rigid and slightly hard | sparse | sparse |
| 3 | 53.6 | 3.2 | flexible | moderate | sparse |
| 4 | 54.6 | 7.3 | good | sparse | moderate |
| 5 | 53.9 | 6.8 | good, flexible | sparse | moderate |

**After 9 months**

| Ex. | Clip strength (mm) | Cooking resistance (hp/cm²) | Stuffing properties | Bacterial growth | Moulds/ yeasts |
|---|---|---|---|---|---|
| Ref. | 53.7 | 2.8 | good | moderate | moderate |
| 1 | 55.7 | 6.7 | slightly hard in stuffing break | sparse | moderate |
| 2 | 56.4 | 2.7 | rigid and slightly hard | sparse | moderate |
| 3 | 53.8 | 3.5 | flexible | moderate | moderate |
| 4 | 53.9 | 6.9 | good | sparse | moderate |
| 5 | 54.2 | 6.7 | good, flexible | sparse | moderate |

As shown in the tables, a better clip strength is obtained with examples 1, 2, and, in addition, a high cooking resistance with example 1. A better cooking resistance is obtained also with examples 1, 3, 4 and 5. The stuffing properties vary, but in general the casing gets slightly more rigid and inflexible with increased clip strength. All samples had good storage stability. Owing to the improved properties of the collagen casing in the form of improved cooking resistance obtained in conjunction with the present invention, such improved collagen casings can be used, for example, in processes which require higher temperatures. As a result, the finished sausage products can be obtained more rapidly.

## Claims

1. A method of pre-soaking a non-edible collagen casing for foodstuffs and reinforcing the clip strenght and/or cooking resistance thereof, **characterised by** treating the dried collagen casing with an aqueous solution of at least two salts selected from the group consisting of sodium bicarbonate, sodium sulphate, ammonium chloride, calcium chloride, sodium hydrogen phosphate, potassium hydrogen phosphate, potassium chloride, ammonium sulphate, optionally in combination with sodium chloride in the range of 0-4% by weight, the total salt concentration being in the range of 5-18% by weight.

2. A method according to claim 1, wherein the total salt concentration is in the range of 8-12%.

3. A method, according to claim 2, **characterised by** treating the dried collagen with an aqueous solution that contains:
- (3%) sodium bicarbonate, 1-6%
- (3%) sodium sulphate, 0-8%
- (4%) sodium chloride, 0-4%
to increase clip strenght and cooking resistance of the non-edible collagen casing for foodstuffs.

4. A method, according to claim 2, **characterised by** treating the dried collagen with an aqueous solution that contains:
- (5%) ammonium chloride, 2-10%
- (4%) sodium chloride, 0-4%
- (2%) calcium chloride, 0-10%
to increase cooking resistance of the non-edible collagen casing for foodstuffs.

5. A method, according to claim 2, **characterised by** treating the dried collagen with an aqueous solution that contains :
- (3%) sodium hydrogen phosphate, 0-6%
- (3%) potassium chloride, 0-10%
- (3%) sodium chloride, 0-4%
to increase cooking resistance of the non-edible collagen casing for foodstuffs.

6. A method, according to claim 2, **characterised by** treating the dried collagen with an aqueous solution that contains:
- (4%) sodium bicarbonate, 2-6%
- (4%) sodium chloride, 2-4%
- (2%) sodium sulphate, 0-4%
to increase cooking resistance of the non-edible collagen casing for foodstuffs.

7. A method according to any of claims 1-6, wherein the non edible collagen casing is further packed into a gas-tight plastic bag.

8. A reinforced non edible collagen casing, which is obtainable by means of the method according to any of claims 1-7.

## Patentansprüche

1. Verfahren zum Vortränken einer nicht essbaren Collagenumhüllung für Nahrungsmittel und Verstärken ihrer Klemmfestigkeit und/oder Kochfestigkeit, **dadurch gekennzeichnet, dass** die getrocknete Collagenumhüllung mit einer wässrigen Lösung von mindestens zwei Salzen behandelt wird, die aus der Gruppe ausgewählt sind, die aus Natriumhydrogencarbonat, Natriumsulfat, Ammoniumchlorid, Calciumchlorid, Natriumhydrogenphosphat, Kaliumhydrogenphosphat, Kaliumchlorid und Ammoniumsulfat besteht, wahlweise in Kombination mit Natriumchlorid im Bereich von 0 bis 4 Gew.-%, wobei die gesamte Salzkonzentration im Bereich von 5 bis 18 Gew.-% liegt.

2. Verfahren nach Anspruch 1, worin die gesamte Salzkonzentration im Bereich von 8 bis 12 % liegt.

3. Verfahren nach Anspruch 2, **dadurch gekennzeichnet, dass** das getrocknete Collagen mit einer wässrigen Lösung behandelt wird, die:
- (3 %) Natriumhydrogencarbonat, 1 bis 6 %
- (3 %) Natriumsulfat, 0 bis 8 %
- (4 %) Natriumchlorid, 0 bis 4 %
enthält, um Klemmfestigkeit und Kochfestigkeit der nicht essbaren Collagenumhüllung für Nahrungsmittel zu erhöhen.

4. Verfahren nach Anspruch 2, **dadurch gekennzeichnet, dass** das getrocknete Collagen mit einer wässrigen Lösung behandelt wird, die:
- (5 %) Ammoniumchlorid, 2 bis 10 %
- (4 %) Natriumchlorid, 0 bis 4 %
- (2 %) Calciumchlorid, 0 bis 10 %
enthält, um die Kochfestigkeit der nicht essbaren Collagenumhüllung für Nahrungsmittel zu erhöhen.

5. Verfahren nach Anspruch 2, **dadurch gekennzeichnet, dass** das getrocknete Collagen mit einer wässrigen Lösung behandelt wird, die:
- (3 %) Natriumhydrogenphosphat, 0 bis 6 %
- (3 %) Kaliumchlorid, 0 bis 10 %
- (3 %) Natriumchlorid, 0 bis 4 %
enthält, um die Kochfestigkeit der nicht essbaren Collagenumhüllung für Nahrungsmittel zu erhöhen.

6. Verfahren nach Anspruch 2, **dadurch gekennzeichnet, dass** das getrocknete Collagen mit einer wässrigen Lösung behandelt wird, die:
- (4 %) Natriumhydrogencarbonat, 2 bis 6 %
- (4 %) Natriumchlorid, 2 bis 4 %
- (2 %) Natriumsulfat, 0 bis 4 %
enthält, um die Kochfestigkeit der nicht essbaren Collagenumhüllung für Nahrungsmittel zu erhöhen.

7. Verfahren nach einem der Ansprüche 1 bis 6, worin die nicht essbare Collagenumhüllung außerdem in einem gasdichten Kunststoffbeutel verpackt ist.

8. Verstärkte nicht essbare Collagenumhüllung, die durch das Verfahren nach einem der Ansprüche 1 bis 7 erhältlich ist.

## Revendications

1. Procédé de prétrempage d'une enveloppe non alimentaire en collagène pour aliments et de renforcement de la résistance de l'agrafe et/ou de la résistance à la cuisson de celle-ci, **caractérisé par** le traitement de l'enveloppe en collagène séchée avec une solution aqueuse composée d'au moins deux sels choisis dans le groupe constitué par le bicarbonate de sodium, le sulfate de sodium, le chlorure d'ammonium, le chlorure de calcium, l'hydrogénophosphate de sodium, l'hydrogénophosphate de potassium, le chlorure de potassium, le sulfate d'ammonium, facultativement en combinaison avec du chlorure de sodium dans la plage de 0 à 4 % en poids, la concentration totale en sels se situant dans la plage de 5 à 18 % en poids.

2. Procédé selon la revendication 1, dans lequel la concentration totale en sels se situe dans la plage de 8 à 12 %.

3. Procédé selon la revendication 2, **caractérisé par** le traitement du collagène séché avec une solution aqueuse qui contient :
- du bicarbonate de sodium (3 %), 1 à 6 %
- du sulfate de sodium (3 %), 0 à 8 %
- du chlorure de sodium (4 %), 0 à 4 %
pour augmenter la résistance de l'agrafe et la résistance à la cuisson de l'enveloppe non comestible en collagène pour aliments.

4. Procédé selon la revendication 2, **caractérisé par** le traitement du collagène séché avec une solution aqueuse qui contient :
- du chlorure d'ammonium (5 %), 2 à 10 %
- du chlorure de sodium (4 %), 0 à 4 %
- du chlorure de calcium (2 %), 0 à 10 %
pour augmenter la résistance à la cuisson de l'enveloppe non comestible en collagène pour aliments.

5. Procédé selon la revendication 2, **caractérisé par** le traitement du collagène séché avec une solution aqueuse qui contient :
- de l'hydrogénophosphate de sodium (3 %), 0 à 6 %
- du chlorure de potassium (3 %), 0 à 10 %
- du chlorure de sodium (3 %), 0 à 4 %
pour augmenter la résistance à la cuisson de l'enveloppe non comestible en collagène pour aliments.

6. Procédé selon la revendication 2, **caractérisé par** le traitement du collagène séché avec une solution aqueuse qui contient :
- du bicarbonate de sodium (4 %), 2 à 6 %
- du chlorure de sodium (4 %), 2 à 4 %
- du sulfate de sodium (2 %), 0 à 4 %
pour augmenter la résistance à la cuisson de l'enveloppe non comestible en collagène pour aliments.

7. Procédé selon l'une quelconque des revendications 1 à 6, dans lequel l'enveloppe non comestible en collagène est en outre emballée dans un sac en plastique étanche aux gaz.

8. Enveloppe non comestible en collagène renforcée, susceptible d'être obtenue à l'aide du procédé selon l'une quelconque des revendications 1 à 7.
